Europäisches Patentamt

European Patent Office

Office européen des brevets

(19)

(11) Numéro de publication : **0 514 304 A1**

(12) **DEMANDE DE BREVET EUROPEEN**

(21) Numéro de dépôt : **92460014.1**

(22) Date de dépôt : **14.05.92**

(51) Int. Cl.⁵ : **H04N 11/04**

(30) Priorité : **17.05.91 FR 9106134**

(43) Date de publication de la demande :
**19.11.92 Bulletin 92/47**

(84) Etats contractants désignés :
**DE GB NL**

(71) Demandeur : **FRANCE TELECOM**
**38-40, rue du Général Leclerc**
**F-92131 ISSY LES MOULINEAUX (FR)**

(71) Demandeur : **TELEDIFFUSION DE FRANCE**
**S.A.**
**21-27, rue Barbès**
**F-92542 Montrouge Cédex (FR)**

(72) Inventeur : **Marti, Bernard**
**Les Motais**
**F-35530 Noyal-Sur-Vilaine (FR)**

(74) Mandataire : **Corlau, Vincent**
**c/o Cabinet Patrice Vidon Immeuble**
**Germanium 80 avenue des Buttes de**
**Coesmes**
**F-35700 Rennes (FR)**

(54) **Procédé de codage et décodage d'images en couleurs à fort taux de compression sans filtrage.**

(57)     Le domaine de l'invention est celui du codage d'images en couleurs.

L'invention concerne un procédé de codage d'images représentées par des signaux source (R,V,B), à l'aide desquels on forme un signal de luminance (Y), par combinaison linéaire à coefficients positifs desdits signaux source (R,V,B), et au moins un signal de couleur (R,B), lesdits signaux de luminance (Y) et de couleur (R,B) étant numérisés, échantillonnés à même résolution, et soumis à une transformation ($12_Y$, $12_R$, $12_B$) mathématique réversible dans le domaine fréquentiel, comprenant les étapes suivantes :

— quantification et affectation ($13_Y$) d'une valeur de code à la composante continue ($C_Y$) et à chaque composante d'un jeu de composantes alternatives ($A_{iY}$) dudit signal de luminance (Y) transformé ;

— quantification et affectation ($13_R$, $13_B$) d'une valeur de code à la seule composante continue ($C_R$, $C_B$) de chacun desdits signaux de couleur (R, B) transformés, un jeu de composantes alternatives ($A_{iR}$, $A_{iB}$) étant reconstruits par estimation lors du décodage, pour chacun desdits signaux de couleur (R, B) transformés.

L'invention s'applique au codage de tout type d'images en couleurs représentées comme la superposition d'images monochromatiques, qu'il s'agisse d'images fixes ou animées.

Fig. 1

EP 0 514 304 A1

Le domaine de l'invention est celui du codage des images en couleurs. Plus précisément, l'invention concerne le codage d'images couleur constituées d'un jeu d'au moins deux voies, ou images, monochromatiques indépendantes. Il peut notamment s'agir du codage des trois signaux de couleur rouge, vert et bleu issus des appareils de prise de vue et utilisés pour la reproduction des images, par exemple sur un écran de télévision.

Le codage de ces signaux est très souvent nécessaire, pour comprimer l'information qu'ils contiennent. C'est notamment le cas lorsque l'on souhaite les transmettre, pour en réduire le débit, ou les stocker, par exemple sur bande ou disque numérique, pour en limiter l'encombrement.

L'invention s'applique aussi bien au codage des images fixes qu'au codage des images en mouvement. Elle n'est pas dépendante du standard de l'image, ni du type de traitement préalable et/ou postérieur subi par les signaux.

Il existe déjà une norme internationale de codage des images couleur fixes, la norme ISO 10 918, également connue sous les désignations JPEG (Joint Photographic Expert Group (Groupe des Experts en Images Fixes)) et ISO-DCT. Cette norme est indifférente au type d'espace colorimétrique utilisé pour la représentation d'une image couleur. Elle considère en effet une image en couleurs comme une pluralité d'images monochromatiques traitées indépendamment.

La norme JPEG permet de traiter simultanément jusqu'à 256 voies monochromatiques. Dans la pratique, on distingue généralement 1, 3 ou 4 voies. Dans certains cas, toutefois, un nombre plus important d'images est distingué. De nombreux satellites, par exemple pour les observations météorologiques, délivrent ainsi les trois signaux de couleur classiques, mais également plusieurs signaux correspondant à des prises de vue dans l'infra-rouge. Il apparaît clairement qu'il est dans ce cas très important de coder ces images, pour en réduire le débit de transmission, en limiter l'espace de stockage nécessaire ou encore en permettre la délivrance par le réseau téléphonique.

Une norme similaire est connue pour le codage des images couleur animées. Il s'agit de la norme ISO 11172, ou norme MPEG (Motion Photographic Expert Group (Groupe des Experts en Images Animées)).

Dans les deux cas, l'image couleur à coder est donc considérée comme la somme de trois (ou plus) voies, ou matrices de pixels, indépendantes. Le choix de ces voies est donc affaire d'application.

Trois représentations sont actuellement utilisées, par habitude : les représentations YUV, RVB (rouge, vert, bleu) et JMC (jaune, magenta, cyan) ou JMCK.

La représentation YUV est dérivée de la Recommandation 601 du CCIR. Les trois matrices de points sont respectivement la matrice des luminances à pleine résolution (Y), et deux matrices de différence de couleur $D_R$ (U) et $D_B$ (V) filtrées à demie-résolution dans les deux sens horizontal et vertical. Ce choix résulte de l'hypothèse implicite, évidente en contexte de studio de télévision, que la conversion entre l'espace colorimétrique de prise de vue et l'espace de codage est effectuée sur des signaux analogiques, sur lesquels les opérations de matriçage et de titrage ne présentent pas de difficultés technologiques.

La conversion analogique-numérique effectuée postérieurement à ces opérations conduit à une représentation de 16 bits par pixel au lieu de 24 (un pixel monochromatique étant codé sur un octet). Une compression ADCT (Adaptative Discrete Cosine Transform (Transformation en Cosinus Discret Adaptative)) est opérée sur cette image déjà comprimée par des moyens analogiques. Cette transformation affecte des valeurs de quantification variable en fonction du rang du coefficient considéré et de la qualité ou du débit souhaite.

A la restitution, il faut effectuer un dématriçage qui est généralement obtenu après conversion numérique-analogique. Cependant, en environnement micro-informatique ou télématique, matriçage et titrage doivent être effectués en numérique, faute de circuits analogiques spécialisés sur les équipements de cette gamme. Ces opérations s'avèrent alors particulièrement coûteuses, en temps de traitement.

De plus, outre les difficultés techniques, les titrages de sous-échantillonnage dans les deux sens introduisent du flou, lors de la reconstruction des images.

La représentation RVB (ou RGB) est la représentation directe de la prise de vue et de la reproduction. Elle ne nécessite aucune opération de filtrage mais elle présente au compresseur une représentation à 24 bits par pixel (ou trois représentations indépendantes à 8 bits par pixel). Ses performances en rapport compression/qualité sont donc moindres que celles de la représentation YUV, qui ne présente que 16 bits par pixels avant compression. Elle est en revanche plus facile à mettre en oeuvre en contexte micro-informatique ou télématique, du fait notamment de l'absence de filtrage.

La représentation JMC(K) ou YMC(K) tri ou quadrichromatique est celle qui résulte d'une séparation de couleurs pour impression. Elle est bien adaptée à la reproduction imprimée de documents mais nécessite, pour la visualisation sur écran, un retour dans l'espace RVB. Par ailleurs, elle est constituée d'une représentation primaire, avant compression, à 24 ou 32 bits par pixel. Elle est bien adaptée au monde de l'édition et de la PAO (Mise en Page Assistée par Ordinateur), mais moins au monde de la télématique.

Il apparaît ainsi que la représentation RVB, plus universelle, est la plus intéressante, du point de vue des applications et de la simplicité des traitements. Toutefois, elle s'avère moins efficace, vis-à-vis des algorithmes de compression de données.

On lui préfère donc souvent la représentation YUV, malgré la complexité du traitement. Le principal inconvénient de la représentation YUV est la nécessité d'un filtrage qui, effectué par des méthodes numériques, demande un temps prohibitif s'il est réalisé en logiciel, ou requiert l'usage d'un DSP (Digital Signal Processor (Processeur Numérique de Traitement du Signal)) ou de circuits spécialisés. De plus, ce titrage entraine bien entendu une perte de qualité de l'image, en produisant notamment des contours flous.

L'invention a pour objectif de pallier ces différents inconvénients de l'état de la technique.

Plus précisément, un objectif de l'invention est de fournir un procédé de codage, et un procédé de décodage correspondant, à fort taux de compression supérieur ou au moins égal à celui obtenu à l'aide de la représentation YUV.

Un autre objectif de l'invention est de fournir de tels procédés ne nécessitant pas de traitements complexes des images considérées, et notamment de filtrages, ni au codage, ni au décodage. L'invention a en effet pour objectif de conserver la résolution d'origine de chaque voie monochromatique, sans compression, avant le codage proprement dit.

Un objectif particulier de l'invention est, de façon liée, de fournir de tels procédés aisément implantables, à faible coût de revient, sur des circuits intégrés, et ne nécessitant pas l'utilisation de circuits spécialisés de traitement du signal.

L'invention a encore pour objectif de fournir de tels procédés, qui puissent être mis en oeuvre aussi bien pour le codage des images fixes que pour le codage des images animées.

Un autre objectif particulier de l'invention est encore de fournir de tels procédés, dotant la représentation RVB des avantages de la représentation YUV, sans en conserver les inconvénients.

De façon complémentaire, l'invention permet de fournir un procédé de codage permettant d'obtenir directement une représentation achromatique de l'image couleur codée.

L'invention a également pour objectif de fournir des codeurs et des décodeurs mettant en oeuvre ces procédés, notamment pour la transmission des images, par exemple en télévision, visiophonie, télécopie, télématique,..., et le stockage des images, sur bande ou sur disque.

Ces objectif, ainsi que d'autres qui apparaîtront par la suite, sont atteints selon l'invention à l'aide d'un procédé de codage d'images en couleurs, représentées par des signaux source à l'aide desquels on forme un signal de luminance, par combinaison linéaire à coefficients positifs desdits signaux source, et au moins un signal de couleur, lesdits signaux de luminance et de couleur étant numérisés, échantillonnés à même résolution, et soumis à une transformation mathématique réversible dans le domaine fréquentiel, comprenant les étapes suivantes :
- quantification et affectation d'une valeur de code à la composante continue et à chaque composante d'un jeu de composantes alternatives dudit signal de luminance transformé ;
- quantification et affectation d'une valeur de code à la seule composante continue de chacun desdits signaux de couleur transformés,

un jeu de composantes alternatives étant reconstruits par estimation lors du décodage, pour chacun desdits signaux de couleur transformés.

La non-transmission (ou le non-stockage) des composantes alternatives des signaux de couleur permet d'améliorer fortement le taux de compression global, sans nécessiter aucun traitement spécifique, tel qu'un filtrage de sous-échantillonnage. En effet, par exemple, la quantité d'informations à prendre en compte est pratiquement divisée par trois dans le cas d'une image tri-chromatique.

Ainsi qu'on le verra par la suite, la reconstruction des composantes non transmises est relativement aisée, en exploitant les corrélations entre les différents signaux dans l'espace transformé (au lieu de les exploiter dans l'espace image d'origine, par le filtrage déjà décrit).

Par signal de luminance, on entend toute combinaison linéaire à coefficients positifs de l'ensemble des signaux source. Ainsi, dans le cas des signaux R,V,B, il s'agit d'une luminance au sens strict, du point de vue photométrique. Dans les cas plus particuliers, tels que ceux faisant intervenir des signaux source infra-rouges, ce terme doit bien sûr être géneralisé à une combinaison linéaire de tous les signaux source, y compris ceux qui sont en dehors du domaine visible.

De même, les signaux de couleur englobent tous les signaux source, qu'ils appartiennent au domaine du visible, aux infra-rouges ou aux ultra-violets.

Avantageusement, le procédé de codage comprend également les étapes suivantes :
- estimation d'un jeu de composantes alternatives de chacun desdits signaux de couleur transformes, en fonction dudit jeu de composantes alternatives dudit signal de luminance transformé et des composantes continues de chacun desdits signaux source transformés ;
- détermination d'un jeu de valeurs de différence entre les composantes alternatives réelles de chacun desdits signaux de couleur transformés et lesdites composantes alternatives estimées correspondantes ;
- quantification et affectation d'une valeur de code à chaque valeur de différence de chacun desdits jeux de valeurs de différence.

De cette façon, il est possible de reconstruire de façon exacte les composantes non transmises, par compensation des détails chromatiques. Le fait de prendre en compte des différences au lieu des composantes elles-mêmes est particulièrement intéressant en terme de codage. En effet, il apparaît qu'un grand nombre de ces différences sont nulles, ou très faibles. Le codage en est alors facilité.

De façon preférentielle, ladite étape d'estimation effectue, pour chacune desdites composantes desdits jeux de composantes alternatives de chacun desdits signaux de couleur transformés, le calcul suivant : $\tilde{A}_{iC} = A_{iY} \times (C_C/C_Y)$ où :

- $\tilde{A}_{iC}$ est la prédiction de la composante alternative de rang i d'un desdits signaux de couleur transformé ;
- $A_{iY}$ est la composante alternative de rang i dudit signal de luminance transformé ;
- $C_C$ est la composante continue d'un desdits signaux de couleur transformé ;
- $C_Y$ est la composante continue dudit signal de luminance transformé.

Les composantes alternatives correspondent aux contours d'une image. En règle très générale, ces contours sont relativement indépendants de la couleur. L'invention s'appuie donc sur le seul signal de luminance, pour determiner les contours, et prédit les valeurs alternatives des signaux de couleur en s'appuyant sur le ratio de la composante continue du signal de couleur sur celle du signal de luminance dans le bloc d'image considéré.

Dans un mode de réalisation avantageux, lesdites affectations d'une valeur de code sont réalisées selon un codage entropique.

Ce procédé s'avère particulièrement intéressant lorsqu'on code les signaux de différences de couleurs, qui présentent très souvent de longues suites de valeurs nulles, après quantification.

Avantageusement, le procédé de codage peut également comprendre une étape de synchronisation des contours de chaque image, ou bloc d'image, monochromatique correspondant à chacun desdits signaux de luminance et de couleur, par la sélection d'une transformation mathématique réversible locale parmi un jeu d'au moins deux transformations, la transformation sélectionnée étant celle permettant la meilleure juxtaposition des contours de l'ensemble desdites images, ou blocs d'images, monochromatiques.

L'invention concerne également un procédé de décodage de signaux d'images couleur comprenant les étapes suivantes :

- reconstruction desdites composantes à partir des valeurs quantifiées et codées correspondantes ;
- estimation d'un jeu de composantes alternatives de chacun desdits signaux de couleur transformés, en fonction dudit jeu de composantes alternatives dudit signal de luminance transformé et des composantes continues de chacun desdits signaux de luminance et de couleur transformés.

Ladite étape d'estimation effectue avantageusement l'opération $\tilde{A}_{iC} = A_{iY} \times (C_C/C_Y)$, de même que l'étape de prédiction mentionnée ci-dessus.

Ainsi, les composantes alternatives sont reconstruites à l'aide d'une simple multiplication. L'invention repose sur l'exploitation des corrélations entre les signaux transformés, qui ne sont plus considérés comme indépendants.

Dans un mode de réalisation avantageux, ledit procédé de décodage comprend également les étapes suivantes :

- reconstruction desdites valeurs de différence, à partir des valeurs quantifiées et codées correspondantes ;
- addition auxdites composantes alternatives estimées de chacun desdits signaux de couleur transformés desdites valeurs de différence, de façon à reconstituer les composantes alternatives de chacun desdits signaux de couleur transformé.

L'utilisation de ces termes correctifs permet de reconstruire exactement les composantes alternatives des signaux de couleur, et non plus une simple estimation.

Il est clair que ces termes correctifs sont optionnels. Il est bien sûr possible de décoder des images sans les prendre en compte, même lorsqu'ils ont été codes lors de l'opération de codage. On peut ainsi prévoir des codeurs et/ou des décodeurs à deux niveaux de qualité, en fonction des besoins, selon que l'on tient compte ou non des termes correctifs.

L'invention concerne également tous les codeurs et/ou décodeurs mettant en oeuvre au moins l'un de ces procédés de codage et/ou de décodage, et notamment les émetteurs et récepteurs de signaux d'images couleur et les moyens de stockage d'images, qu'il s'agisse d'images fixes et/ou d'images animées.

D'autres caractéristiques et avantages de la présente invention apparaîtront à la lecture de la description suivante d'un mode de réalisation préférentiel de l'invention, donné à titre illustratif et non limitatif, et des dessins annexés, dans lesquels :

- la figure 1 est un schéma synoptique d'un codeur selon l'invention, dans sa version simplifiée ;
- la figure 2 est un schéma synoptique d'un second codeur, assurant le codage supplémentaire de données de compensation des détails chromatiques ;
- la figure 3 est un schéma synoptique d'un décodeur selon l'invention, correspondant aux codeurs des figures 1 et 2, et ne réalisant pas la compensation de détails chromatiques ;
- la figure 4 est un schéma synoptique d'un décodeur selon l'invention, correspondant aux codeurs des figures 1 et 2, à compensation des détails chromatiques.

Ainsi qu'on l'a déjà mentionné, l'invention repose essentiellement sur la prise en compte des corrélations des différents signaux représentatifs d'une image dans le domaine transformé des fréquences.

Au contraire, selon l'art antérieur, on exploitait les corrélations existant dans l'espace image, par exemple par sous-échantillonnage, mais l'on considérait ensuite que tous les signaux étaient indépendants. Ce principe est d'ailleurs à la base des normes JPEG et MPEG.

L'invention est notamment basée sur l'analyse suivante : sur une image, les contours sont généralement les mêmes, quelle que soit la couleur considérée. De plus, du point de vue psychovisuel, on sait que l'oeil est peu sensible à la couleur des contours. Une seule information de contour suffit donc : il n'est pas nécessaire de coder ces contours pour tous les signaux de couleur.

Dans la suite, on considère que toute matrice spatiale comprend une composante continue C et des composantes alternatives $A_i$, où i représente le rang de la composante, selon la notation liée à la numérotation en zig-zag de la norme ISO 10918.

Selon l'invention on ne considère donc qu'une matrice globale des fréquences spatiales, la matrice de luminance.

La luminance étant une combinaison linéaire positive des différents signaux de couleur, il est clair qu'une composante de luminance n'est nulle que si les composantes correspondantes des signaux de couleur le sont simultanément. Il est donc ainsi facile de déterminer les valeurs nulles des matrices spatiales des signaux de couleur.

On reconstruit ensuite les autres composantes, en appliquant à la composante alternative de luminance correspondante le rapport des composantes continues $C_C/C_Y$ (l'indice C représente le signal de couleur considéré). En effet, compte tenu des propriétés des images colorées, il est hautement probable, pour des signaux RVB, que $A_{IR} = A_{IY} \times C_R/C_Y$ et que $A_{IB} = A_{IY} \times C_B/C_Y$. Pour plus de précision dans la reconstruction, on peut également tenir compte de termes correctifs, ainsi qu'on le verra par la suite.

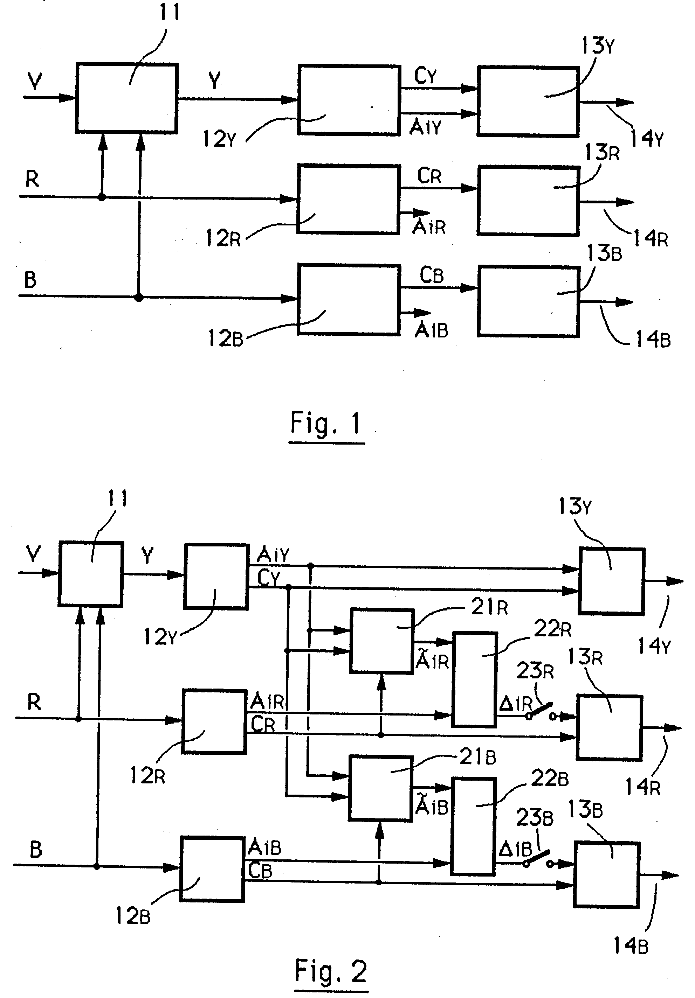

La figure 1 présente le schéma synoptique d'un premier mode de réalisation d'un codeur, ne mettant pas en oeuvre de compensation chromatique.

On considère, dans ce mode de réalisation préférentiel, le codage de signaux RVB (rouge, vert, bleu) tels que ceux issus d'une caméra de prise de vue. Cette représentation est particulièrement avantageuse, car elle correspond directement à la prise de vue et à la reproduction, sans traitement particulier. Il est clair toutefois que l'invention peut aussi bien s'appliquer à tout autre type de représentation, et notamment aux représentations YUV et JMC (K).

La première étape du codage consiste à déterminer, à l'aide d'une matrice 11, un signal de luminance Y, à partir des signaux d'origine R, V, B. Cette luminance peut par exemple être calculée à l'aide de la formule classique : Y = 0,59 x V + 0,30 x R + 0,11 x B. Toute autre combinaison linéaire à coefficients positifs peut également être retenue.

Chacun des signaux Y, R et B est ensuite transformé dans l'espace des fréquences, à l'aide d'un module $12_Y$, $12_R$, $12_B$ de transformation mathématique réversible. Il s'agit avantageusement d'une transformation en cosinus discret (DCT). D'autres transformations, telles que les transformations de Fourier, de Haar, de Hadamard,... peuvent bien sûr également être utilisées. Ces modules de transformation délivrent, pour chaque bloc d'image considéré, une composante continue C sur le bloc, et un jeu de composantes alternatives $A_i$.

L'ensemble des composantes continue $C_Y$ et alternatives $A_{IY}$ est ensuite transmis à un module $13_Y$ de compression, qui réalise la quantification et l'affectation d'une valeur de code à chacune des composantes. La quantification est préférentiellement adaptative (par exemple selon la méthode ADCT déjà mentionnée), en fonction de différents critères, notamment psycho-visuels. L'affectation d'une valeur de code se fait de manière classique, préférentiellement à l'aide d'un code entropique, tel qu'un code de Huffman.

En revanche, on ne considère que les composantes continues $C_R$ et $C_B$ des signaux de couleur (dans ce mode de realisation, il est donc clair qu'il n'est pas nécessaire de calculer les composantes alternatives de ces signaux qui n'apparaissent sur la figure 1 que pour faciliter la compréhension de l'invention).

Les modules $13_R$ et $13_B$ de compression réalisent donc simplement le codage de $C_R$ et $C_B$. La quantification et le code utilisés peuvent être identiques ou distincts de ceux mis en oeuvre pour la compression du signal de luminance. Il peut par exemple s'agir d'un codage au premier niveau de la méthode ADCT en ne considérant que la composante continue.

Les signaux codes $14_Y$, $14_R$, $14_B$ sont ensuite émis et/ou stockés, ou encore, éventuellement, soumis à un autre traitement complémentaire de compression, d'encryptage, etc...

Dans ce mode de réalisation, le taux de compression obtenu est bien supérieur à celui du procédé YUV, sans qu'il soit nécessaire d'effectuer de filtrage de sous-échantillonnage. En effet, si l'on considère le cas de blocs de 64 éléments, il est nécessaire de comprimer, pour chaque bloc :

- 3 x 64 = 192 éléments pour la représentation RVB classique ;
- 64 + (2 x 16) = 96 éléments pour la représentation YUV classique (les deux signaux de couleur étant titrés à demie-résolution dans les deux dimensions) ;
- 64 + 2 = 66 éléments pour la représentation YRB selon l'invention.

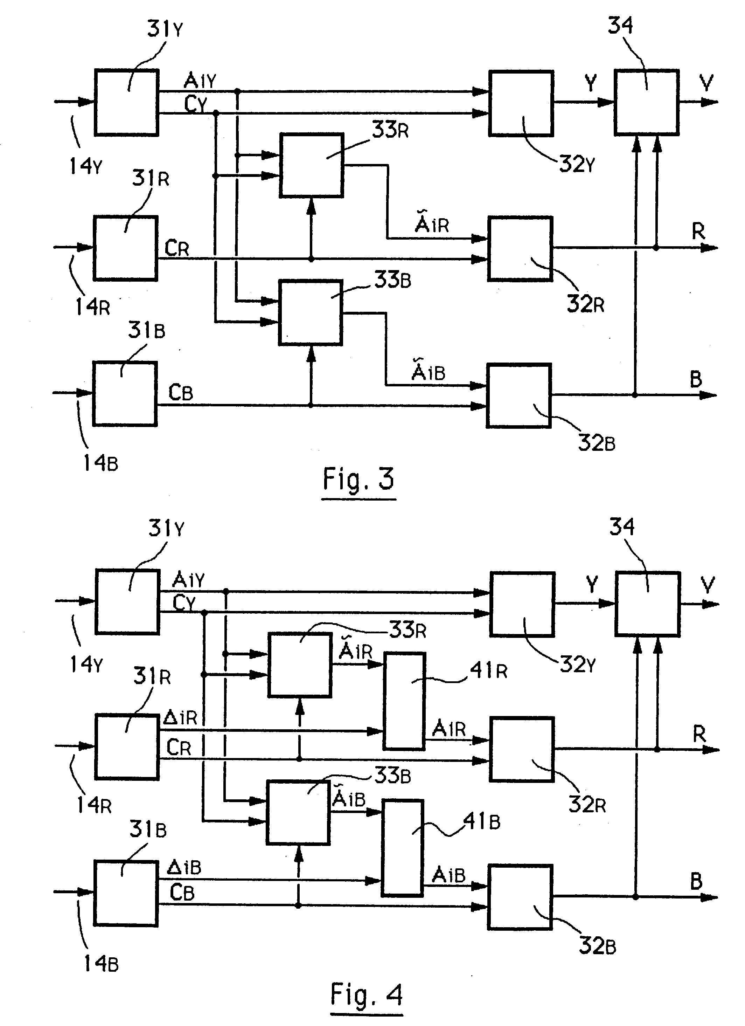

Dans ce cas, les composantes non transmises sont reconstruites, par estimation, lors du décodage. La figure 3 illustre un exemple de décodeur correspondant.

Les signaux $14_Y$, $14_R$, $14_B$ émis, ou stockés, codés à l'aide du codeur de la figure 1 (ou du codeur de la figure 2, ainsi qu'on le verra par la suite), sont chacun décomprimés, à l'aide d'un module $31_Y$, $31_R$, $31_B$ de décompression effectuant un décodage et une quantification inverses de ceux effectués dans les modules $13_Y$, $13_R$, $13_B$ de compression correspondants, de façon classique.

Le module $31_Y$ délivre les composantes continue $C_Y$ et alternatives $A_{IY}$ du signal de luminance Y, qui sont transformées, à l'aide d'une transformée $32_Y$ inverse de celle utilisée lors du codage, de façon à obtenir le signal Y d'origine.

En revanche, les modules $31_R$ et $31_B$ de décompression ne restituent, bien sûr, que les composantes continues $C_R$ et $C_B$ des signaux de couleur, qui sont transmises à deux modules $32_R$, $32_B$ de transformation inverse.

Pour reconstituer les signaux de couleur R et B, il est donc nécessaire de reconstruire leurs composantes alternatives $A_{IR}$ et $A_{IB}$.

Le décodeur selon l'invention comprend pour cela un module $33_R$, $33_B$ d'estimation de ces composantes alternatives, pour chaque signal de couleur R,B. Ainsi que cela a déjà été précisé, il s'agit d'une caractéristique essentielle de l'invention, qui exploite dans ces modules d'estimation les corrélations des différents signaux dans l'espace transformé des fréquences.

Le calcul effectué par les modules d'estimation est le suivant :

$$\tilde{A}_{IR} = A_{IY} \times (C_R/C_Y)$$
$$\tilde{A}_{IB} = A_{IY} \times (C_B/C_Y)$$

En d'autres termes, on considère que les contours (composantes alternatives) sont situés aux mêmes endroits pour les différents signaux, ce qui est pratiquement toujours le cas. Cela est d'ailleurs d'autant plus probable que l'on prend comme base le signal de luminance Y, auquel participent tous les signaux de couleur.

La valeur de chaque composante non nulle est déterminée par l'application du ratio des composantes continues, qui correspondent à l'intensité de chaque signal.

Ainsi, la matrice complète ($C_Y$, $A_{IY}$) du signal de luminance permet de prévoir la position des valeurs nulles (si $A_{IY} = 0$ alors $A_{IR} = 0$ et $A_{IB} = 0$) des matrices des signaux de couleur. On estime ensuite la valeur des coefficients non nuls $A_{IR}$ et $A_{IB}$.

Le cas particulier où $C_Y = 0$ doit bien sûr être traité indépendamment. Il ne pose cependant pas de problème, puisque $C_Y$ ne peut être nulle que si $C_R$ et $C_B$ le sont simultanément. Les coefficients alternatifs seront alors tous nuls.

Il est à noter que ces calculs sont particulièrement simples. Une seule multiplication est nécessaire pour chaque composante alternative, le ratio $C_Y/C_R$ ou $C_Y/C_B$ étant déterminé une fois pour toute, pour chaque bloc.

Les essais effectués montrent que ce procédé offre de très bons résultats, avec un taux de compression supérieur à celui obtenu avec la méthode YUV classique. Toutefois, ainsi qu'on le verra en liaison avec les figures 2 et 4, on peut prévoir des moyens, dans un second mode de réalisation, permettant de reconstituer les valeurs réelles des composantes alternatives des signaux de couleur, et non plus des estimations.

Les modules $32_Y$, $32_R$ et $32_B$ de transformation inverse délivrent ensuite les signaux de luminance Y et les signaux de couleur R et B. Une matrice 34 inverse de la matrice 11 utilisée au codage permet de récupérer le troisième signal de couleur V.

La figure 2 présente un second type de codeur, dit par la suite codeur à compensation des détails chromatiques. Seules les différences avec le codeur de la figure 1 seront décrites.

L'objectif de ce codeur est de permettre, au décodage, la reconstruction parfaite des composantes $A_{IR}$, $A_{IB}$. Pour cela, il comprend deux modules $21_R$, $21_B$ d'estimation des composantes alternatives, identiques aux modules $33_R$ et $33_B$ d'estimation mis en oeuvre dans les décodeurs.

Ainsi, le codeur connaît la valeur $\tilde{A}_{IR}$, $\tilde{A}_{IB}$ qui sera déterminée par les décodeurs, et peut, par une simple différence $22_R$, $22_B$ entre ces valeurs et les valeurs reelles $A_{IR}$, $A_{IB}$, fournir des valeurs d'écart $\Delta_{IR}$, $\Delta_{IB}$.

En d'autres termes, on code la partie résiduelle de la composante alternative à l'aide des modules de compression $32_R$ et $32_B$, en considérant que la première passe a été effectuée avec un facteur de quantification fictif dont les restes sont : $\Delta_{IR} = A_{IR} - A_{IY} \times C_R/C_Y$ et $\Delta_{IB} = A_{IB} - A_{IY} \times C_B/C_Y$.

En principe, c'est-à-dire sauf cas très particulier, ces différences sont souvent nulles, après quantification. Leur transmission et/ou leur stockage influent donc assez peu sur le taux de compression, si l'on utilise un code entropique, tel qu'un code de Huffman.

Ainsi qu'on l'a vu avec le codeur de la figure 1, ces valeurs de différence ne sont pas obligatoires. Elles permettent toutefois de compenser certains détails de couleur, et donc d'améliorer la qualité de l'image finale. Il est donc possible de prévoir des codeurs à deux niveaux de qualité, en fonction des besoins.

Pour cela, le codeur de la figure 2 comprend des moyens $23_R$ et $23_B$ permettant sélectivement de prendre en compte ou non les différences $\Delta_{IR}$ et $\Delta_{IB}$. Dans le second cas, ce codeur fonctionne de la même façon que le codeur de la figure 1.

On peut également prévoir que ces moyens $23_R$ et $23_B$ de sélection soient pilotés dynamiquement, et éventuellement indépendamment, de façon à permettre une régulation du débit de transmission.

La figure 4 présente le schéma synoptique d'un décodeur correspondant au codeur de la figure 2.

Les modules 31, $31_R$ et $31_B$ de décompression délivrent respectivement les composantes $C_Y$, $A_{iY}$, $C_R$, $C_B$ et les différences $\Delta_{iR}$ et $\Delta_{iB}$.

De même que dans le décodeur de la figure 3, les modules d'estimation déterminent les valeurs estimées des composantes alternatives $\tilde{A}_{iR}$ et $\tilde{A}_{iB}$ des signaux de couleur.

Un additionneur $41_R$, $41_B$ permet alors de compenser, pour chaque signal de couleur, les détails chromatiques, et fournit aux modules $32_R$ et $32_B$ de transformation inverse les composantes alternatives exactes :

$$A_{iR} = \tilde{A}_{iR} + \Delta_{iR}$$
$$A_{iB} = \tilde{A}_{iB} + \Delta_{iB}$$

La fin du traitement est identique à celui décrit pour le décodeur de la figure 3.

Il est à noter que ce décodeur permet, sans adaptation, le décodage de signaux codés sans compensation des détails chromatiques. Dans ce cas, les différences $\Delta_{iR}$ et $\Delta_{iB}$ sont nulles.

Les modes de réalisation décrits ci-dessus considèrent le codage de signaux RVB, correspondant à la représentation la plus universelle. Les procédés de l'invention ne sont toutefois nullement limites à ce type de signaux mais permettent au contraire le codage et le décodage de toutes les images couleurs, dès lors qu'elles sont représentées comme une superposition d'images monochromatiques. Il est notamment aisé de généraliser l'invention au codage de plus de trois signaux.

L'origine des signaux est également quelconque. L'invention s'applique au codage de tous signaux source, qu'ils soient issus d'un appareil de prise de vue (caméra, appareil photographique, etc...), ou de moyens de restitution ou de création d'images (par exemple images de synthèse ou images traitées informatiquement).

L'invention utilise de plus un signal de luminance, ce qui présente plusieurs avantages. On sait notamment, du point de vue physiologique, que les cônes de la rétine ne sont pas sensibles aux couleurs, mais sensibles à la finesse des détails. Par ailleurs, disposer d'un signal de luminance directement facilite le mode de repli de la représentation achromatique (dite en Noir et Blanc) directement obtenue par ce signal.

Par ailleurs, on notera que l'invention ne sous-entend pas le codage de l'ensemble des composantes alternatives du signal de luminance. On peut prévoir que seul un jeu des premières composantes (selon la numérotation en zig-zag) soit pris en compte. Le nombre d'éléments de ce jeu de composantes peut être variable, soit pour offrir plusieurs niveaux de qualité d'image, soit en fonction de critères psychovisuels, liés par exemple à l'analyse du mouvement. Bien sûr, dans ce cas, seules les composantes alternatives $A_{iR}$ et $A_{iB}$ de mêmes rangs des signaux de couleur seront reconstruites au décodage.

**Revendications**

1. Procédé de codage d'images en couleurs, représentées par des signaux source (R,V,B) à l'aide desquels on forme un signal de luminance (Y), par combinaison linéaire à coefficients positifs desdits signaux source (R,V,B), et au moins un signal de couleur (R,B), lesdits signaux de luminance (Y) et de couleur (R,B) étant numérisés, échantillonnés à même résolution, et soumis à une transformation ($12_Y$, $12_R$, $12_B$) mathématique réversible dans le domaine fréquentiel,
   caractérisé en ce qu'il comprend les étapes suivantes :
   - quantification et affectation ($13_Y$) d'une valeur de code à la composante continue ($C_Y$) et à chaque composante d'un jeu de composantes alternatives ($A_{iY}$) dudit signal de luminance (Y) transformé ;
   - quantification et affectation ($13_R$, $13_B$) d'une valeur de code à la seule composante continue ($C_R$, $C_B$) de chacun desdits signaux de couleur (R, B) transformés, un jeu de composantes alternatives ($A_{iR}$, $A_{iB}$) étant reconstruits par estimation lors du décodage, pour chacun desdits signaux de couleur (R, B) transformés.

2. Procédé de codage selon la revendication 1, caractérisé en ce qu'il comprend également les étapes suivantes :
   - estimation ($21_R$, $21_B$) d'un jeu de composantes alternatives ($\tilde{A}_{iR}$, $\tilde{A}_{iB}$) de chacun desdits signaux de couleur (R, B) transformés, en fonction dudit jeu de composantes alternatives ($A_{iY}$) dudit signal de luminance (Y) transformé et des composantes continues ($C_Y$, $C_R$, $C_B$) de chacun desdits signaux source (Y, R, B) transformés ;
   - détermination ($22_R$, $22_B$) d'un jeu de valeurs de différence ($\Delta_{iR}$, $\Delta_{iB}$) entre les composantes alternatives réelles ($A_{iR}$, $A_{iB}$) de chacun desdits signaux de couleur (R, B) transformés et lesdites composantes alternatives estimées correspondantes ($\tilde{A}_{iR}$, $\tilde{A}_{iB}$);
   - quantification et affectation ($13_R$, $13_B$) d'une valeur de code à chaque valeur de différence de chacun desdits jeux de valeurs de différence ($\Delta_{iR}$, $\Delta_{iB}$).

3. Procédé selon la revendication 2, caractérisé en ce que ladite étape d'estimation ($21_R$, $21_B$) effectue, pour chacune desdites composantes ($\tilde{A}_{iR}$, $\tilde{A}_{iB}$) desdits jeux de composantes alternatives de chacun desdits signaux de couleur (R,B) transformés, le calcul suivant : $\tilde{A}_{iC} = A_{iY} \times (C_C/C_Y)$
   où :
   - $\tilde{A}_{iC}$ est la prédiction de la composante alternative de rang i d'un desdits signaux de couleur (R,B) transformé ;

- $A_{iY}$ est la composante alternative de rang i dudit signal de luminance (Y) transformé ;

- $C_C$ est la composante continue d'un desdits signaux de couleur (R,B) transformé ;

- $C_Y$ est la composante continue dudit signal de luminance (Y) transformé.

4. Procédé selon l'une quelconque des revendications 1 à 3, caractérisé en ce que lesdites affectations ($13_Y$, $13_R$, $13_B$) d'une valeur de code sont réalisées selon un codage entropique.

5. Procédé selon l'une quelconque des revendications 1 à 4, caractérisé en ce qu'il comprend une étape de synchronisation des contours de chaque image monochromatique correspondant à chacun desdits signaux de luminance (Y) et de couleur (R,B), par la sélection d'une transformation mathématique réversible locale parmi un jeu d'au moins deux transformations, ladite transformation sélectionnée étant celle permettant la meilleure juxtaposition des contours de l'ensemble desdites images monochromatiques.

6. Codeur de signaux d'images en couleurs mettant en oeuvre le procédé de codage de l'une quelconque des revendications 1 à 5.

7. Procédé de décodage de signaux d'images couleur codés selon l'une quelconque des revendications 1 à 5, caractérisé en ce qu'il comprend les étapes suivantes :

- reconstruction ($31_Y$, $31_R$, $31_B$) desdites composantes ($C_Y$, $A_{iY}$, $C_R$, $C_B$) à partir des valeurs ($14_Y$, $14_R$, $14_B$) quantifiées et codées correspondantes ;

- estimation ($33_R$, $33_B$) d'un jeu de composantes alternatives ($\tilde{A}_{iR}$, $\tilde{A}_{iB}$) de chacun desdits signaux de couleur (R, B) transformés, en fonction dudit jeu de composantes alternatives ($A_{iY}$) dudit signal de luminance (Y) transformé et des composantes continues ($C_Y$, $C_R$, $C_B$) de chacun desdits signaux de luminance (Y) et de couleur (R,B) transformés.

8. Procédé selon la revendication 7, caractérisé en ce que ladite étape d'estimation ($33_R$, $33_B$) effectue, pour chacune desdites composantes ($\tilde{A}_{iR}$, $\tilde{A}_{iB}$) desdits jeux de composantes alternatives de chacun desdits signaux de couleur (R,B) transformés, le calcul suivant : $\tilde{A}_{iC} = A_{iY} \times (C_C/C_Y)$ où :

- $\tilde{A}_{iC}$ est la prédiction de la composante alternative de rang i d'un desdits signaux de couleur (R,B) transformé ;

- $A_{iY}$ est la composante alternative de rang i dudit signal de luminance (Y) transformé ;

- $C_C$ est la composante continue d'un desdits signaux de couleur (R,B) transformé ;

- $C_Y$ est la composante continue dudit signal de luminance (Y) transformé.

9. Procédé selon l'une quelconque des revendications 2 à 5, pour le décodage de signaux codés selon le procédé de l'une quelconque des revendications 2 à 5, caractérisé en ce qu'il comprend également les étapes suivantes :

- reconstruction ($31_R$, $31_B$) desdites valeurs de différence ($\Delta_{iR}$ $\Delta_{iB}$), à partir des valeurs ($14_R$, $14_B$) quantifiées et codées correspondantes ;

- addition ($41_R$, $41_B$) auxdites composantes alternatives estimées ($\tilde{A}_{iR}$, $\tilde{A}_{iB}$) de chacun desdits signaux de couleur (R, B) transformés desdites valeurs de différence ($\Delta_{iR}$, $\Delta_{iB}$), de façon à reconstituer les composantes alternatives ($A_{iR}$, $A_{iB}$) de chacun desdits signaux de couleur (R,B) transformé.

10. Décodeur de signaux d'images en couleurs mettant en oeuvre le procédé de décodage de l'une quelconque des revendications 7 à 9.

11. Application du procédé de codage selon l'une quelconque des revendications 1 à 5 et/ou du procédé de décodage selon l'une quelconque des revendications 7 à 9 au codage et/ou au décodage d'images fixes.

12. Application du procédé de codage selon l'une quelconque des revendications 1 à 5 et/ou du procédé de décodage selon l'une quelconque des revendications 7 à 9 au codage et/ou au décodage d'images en mouvement.

Fig. 1

Fig. 2

Fig. 3

Fig. 4

**Office européen des brevets**

# RAPPORT DE RECHERCHE EUROPEENNE

Numero de la demande

EP    92 46 0014

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-9 101 613 (EASTMAN KODAK COMPANY)<br><br>* page 3, ligne 27 - page 4, ligne 10 *<br>--- | 1,6-7,<br>10-11 | H04N11/04 |
| A | DE-A-3 505 368 (HEINRICH-HERTZ-INSTITUT FUR NACHRICHTENTECHNIK BERLIN GMBH)<br>* abrégé; figure 1 *<br><br>----- | 1 | |

|  | DOMAINES TECHNIQUES RECHERCHES (Int. Cl.5) |
|---|---|
|  | H04N |

Le présent rapport a été établi pour toutes les revendications

| Lieu de la recherche | Date d'achèvement de la recherche | Examinateur |
|---|---|---|
| LA HAYE | 28 JUILLET 1992 | SCHINNERL A. |

EPO FORM 1503 03.82 (P0402)